(19) **Europäisches Patentamt**
**European Patent Office**
**Office européen des brevets**

(11) **EP 1 421 359 B1**

(12) **FASCICULE DE BREVET EUROPEEN**

(45) Date de publication et mention
de la délivrance du brevet:
**04.07.2007 Bulletin 2007/27**

(21) Numéro de dépôt: **02777404.1**

(22) Date de dépôt: **08.08.2002**

(51) Int Cl.:
***G01N 1/00*** *(2006.01)*

(86) Numéro de dépôt international:
**PCT/FR2002/002828**

(87) Numéro de publication internationale:
**WO 2003/019132 (06.03.2003 Gazette 2003/10)**

(54) **PROCEDE ET DISPOSITIF POUR LA DETERMINATION AUTOMATIQUE DE LA PERMEABILITE D'UN OBJET EN MATIERE POREUSE A PLUSIEURS NIVEAUX DE POROSITE ALTERNES**

VERFAHREN UND VORRICHTUNG ZUR AUTOMATISCHEN BESTIMMUNG DER PERMEABILITÄT EINES OBJEKTES AUS PORÖSER MATERIE MIT VERSCHIEDENEN ALTERNIERENDEN POROSITÄTSNIVEAUS

METHOD AND DEVICE FOR AUTOMATICALLY DETERMINING PERMEABILITY OF AN OBJECT MADE OF POROUS MATERIAL WITH SEVERAL ALTERNATING POROSITY LEVELS

(84) Etats contractants désignés:
**AT BE BG CH CY CZ DE DK EE ES FI FR GB GR IE IT LI LU MC NL PT SE SK TR**

(30) Priorité: **28.08.2001 FR 0111288**

(43) Date de publication de la demande:
**26.05.2004 Bulletin 2004/22**

(73) Titulaire: **SOCIETE NATIONALE D'EXPLOITATION INDUSTRIELLE DES TABACS ET ALLUMETTES (S.E.I.T.A.)**
**75013 Paris (FR)**

(72) Inventeur: **Cholet, Georges**
**45140 Ormes (FR)**

(74) Mandataire: **de Saint-Palais, Arnaud Marie et al Cabinet Moutard,**
**B.P. 513**
**78005 Versailles Cedex (FR)**

(56) Documents cités:
**EP-A- 0 932 036          US-A- 4 495 796**

EP 1 421 359 B1

Printed by Jouve, 75001 PARIS (FR)

**Description**

La présente invention concerne un procédé et dispositif pour la détermination automatique de la perméabilité d'un objet en matière poreuse, à plusieurs niveaux de porosité alternés, cet objet pouvant se présenter sous la forme d'une feuille ou d'une bande en matière poreuse comprenant des plages successives qui présentent alternativement, selon une périodicité préétablie, des niveaux de perméabilité différents.

Elle s'applique notamment mais non exclusivement au contrôle et à la mesure de la perméabilité des plages d'une bande de papier du type de celle décrite dans le brevet EP 0486213 A1 à trame de fibre cellulosique qui présente une succession de plages transversales de masse volumique différentes et donc de perméabilité différente. Cette bande de papier peut par exemple servir, mais non nécessairement, à la réalisation de cigarettes auto-extinguibles.

D'une façon générale, on sait que la mesure de la perméabilité d'une feuille en matière poreuse s'obtient au moyen d'un perméamètre comportant une tête de mesure comprenant deux parties tubulaires mobiles l'une par rapport à l'autre, de manière à pouvoir venir en butée, l'une contre l'autre, en emprisonnant la feuille, au moins partiellement et de façon étanche, et en délimitant ainsi deux chambres coaxiales donnant respectivement sur deux faces distinctes de la feuille. L'une de ces chambres est raccordée à un circuit de mesure comportant un débit-mètre, des moyens de pompage aptes à engendrer dans le circuit de mesure une pression ou une dépression et des moyens de régulation aptes à maintenir dans le circuit de mesure une pression déterminée.

Il s'avère que les fabricants des bandes en matière poreuse du type susdit, de même que les utilisateurs de ces bandes, souhaitent pouvoir contrôler la perméabilité des plages poreuses de la bande à raison d'une mesure au milieu de chaque bande, qu'il s'agisse d'une plage à faible perméabilité ou d'une plage à forte perméabilité.

Pour parvenir à ces résultats, il convient de satisfaire aux deux conditions suivantes :

- l'utilisation d'une tête de mesure dont les chambres présentent des dimensions inférieures à celles des plages de manière à ce que, lorsque les deux chambres sont centrées sur une plage, la mesure porte uniquement sur la perméabilité d'une zone centrale de cette plage,

- la mise en oeuvre de moyens (procédé et dispositif) permettant de centrer la tête de mesure sur chacune des plages dont on souhaite mesurer la perméabilité.

La première condition est facilement satisfaite si l'on connaît les dimensions des plages (en principe fournies par les fabricants de papier).

Par contre la seconde condition pose un véritable problème du fait que les plages poreuses des bandes ne sont pas visibles et qu'il n'est donc pas possible d'initialiser la position de la bande par un repérage visuel.

L'invention a donc plus particulièrement pour but un procédé de détermination de perméabilité qui résout efficacement ce problème et ce, de façon totalement automatique.

A cet effet, elle part de la constatation qu'il est possible de faire coïncider le profil de perméabilité de la bande avec une sinusoïde (obtenue par une régression sinusoïdale à partir de ce profil) dont les extrema déterminent la position des milieux des plages considérées.

En conséquence, le procédé selon l'invention comprend :

- d'une part, une phase préliminaire comportant la détermination du profil de perméabilité de la bande sur au moins une longueur de laize de période T incluant deux plages successives, la détermination d'une sinusoïde par régression sinusoïdale à partir du profil obtenu, la détermination de la position des deux extrema de cette sinusoïde et le centrage de la tête de mesure sur le deuxième extremum, et

- d'autre part, une phase de mesure comprenant l'avance pas à pas de la bande de papier par pas de T/2 avec, à chaque pas, une mesure de perméabilité.

La détermination du profil de perméabilité effectuée dans la phase préliminaire pourra être réalisée en effectuant une succession de mesures de perméabilité selon une période t très inférieure à la période T (par exemple millimétrique).

La régression sinusoïdale réalisée dans cette phase pourra être effectuée par la méthode des moindres carrés, à partir des valeurs obtenues lors de la détermination du profil de perméabilité.

Bien entendu, l'invention concerne un dispositif pour la mise en oeuvre de ce procédé.

Un mode d'exécution de l'invention sera décrit ci-après, à titre d'exemple non limitatif, avec référence aux dessins annexés, dans lesquels :

La figure 1 est une vue de dessus d'une bande de papier présentant successivement des plages à faible perméabilité et des plages à forte perméabilité ;

La figure 2 est un diagramme montrant le profil de perméabilité de la bande sur une période T ;

La figure 3 est une vue en coupe schématique d'un dispositif de détermination automatique de la perméabilité d'une bande de papier du type de celle représentée figure 1 ;

La figure 4 est un diagramme indiquant les points de mesure de perméabilité obtenus lors de la phase de détermination du profil de perméabilité et la courbe de régression correspondante.

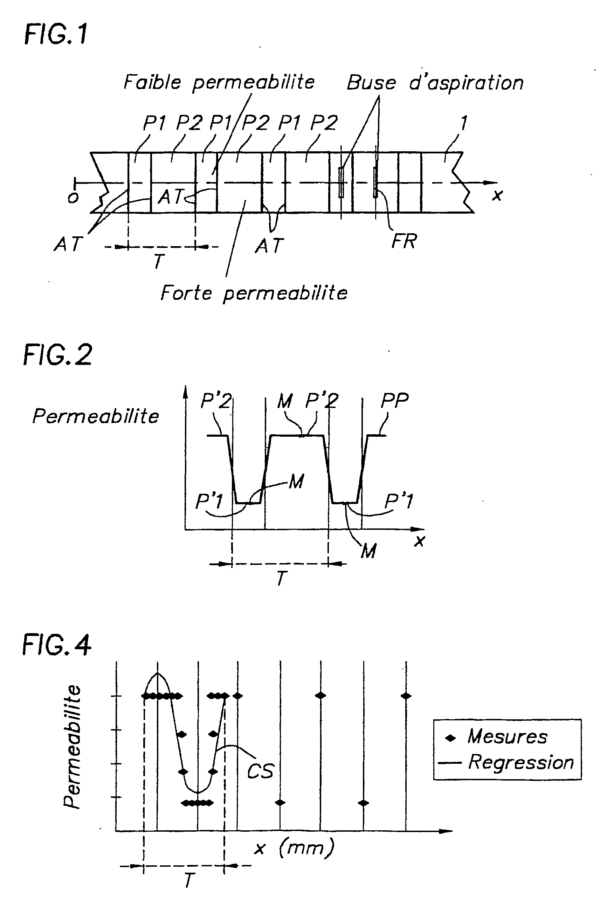

Dans l'exemple représenté sur la figure 1, la bande de papier 1 est un papier à cigarettes comportant deux séries alternées de plages $P_1$, $P_2$ présentant deux perméabilités différentes de manière à permettre une auto-extinction des cigarettes abandonnées.

Les plages $P_1$, $P_2$ s'étendent perpendiculairement à l'axe longitudinal OX de la bande 1. La plage de faible perméabilité $P_1$ présente une largeur inférieure à celle de la plage de forte perméabilité $P_2$. Cette bande peut être réalisée conformément au procédé de fabrication décrit dans le brevet EP 0486213 A1 précité.

Comme précédemment mentionné, les plages successives $P_1$, $P_2$ de la bande ne se distinguent pas visuellement (les traits de séparation indiqués sur la figure 1 n'existant pas physiquement). En conséquence, la seule possibilité de repérage des bandes est de mesurer point par point (par exemple millimètre par millimètre) la perméabilité de la bande selon l'axe longitudinal OX de celle-ci, de manière à obtenir un profil de perméabilité PP tel que celui indiqué dans la figure 2. Ce profil présente une forme crénelée comportant des paliers inférieurs $P'_1$ qui correspondent aux plages de faible perméabilité $P_1$ et des paliers supérieurs $P'_2$ qui correspondent aux plages de forte perméabilité $P_2$. Ces paliers $P'_1$, $P'_2$ sont reliés les uns aux autres par des rampes correspondant aux zones de transition entre les plages $P_1$, $P_2$ successives.

Il est clair que la détermination des milieux M des paliers $P'_1$, $P'_2$ du profil obtenu permet d'obtenir la position des axes médians transversaux AT des plages $P_1$, $P_2$.

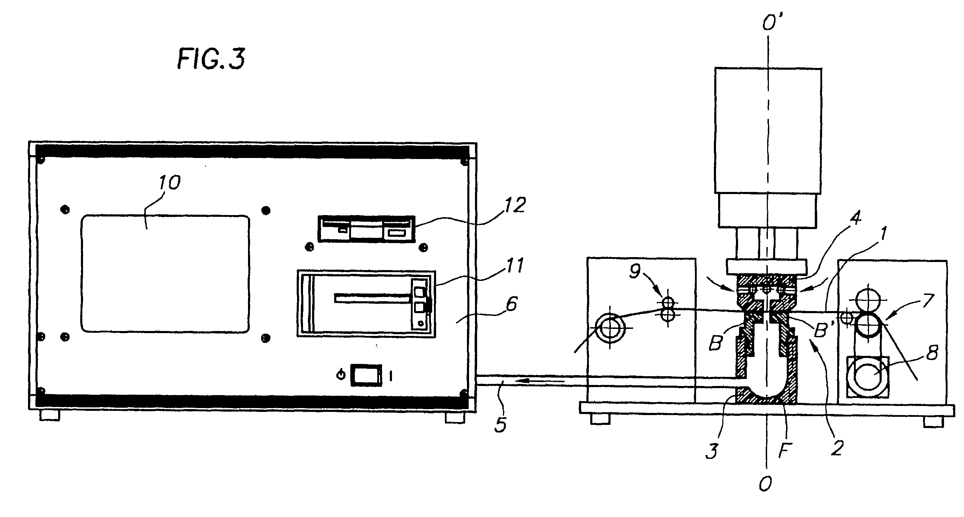

Tel que représenté sur la figure 3, le dispositif de détermination automatique de la perméabilité de la bande de papier 1 comprend une tête de mesure 2 comportant deux parties tubulaires 3, 4 sensiblement de même dimension, entre lesquelles passe la bande 1. Ces deux parties tubulaires 3, 4 sont mobiles l'une par rapport à l'autre et peuvent se disposer coaxialement l'une vis-à-vis de l'autre pour venir en butée l'une contre l'autre en serrant la bande 1 entre leurs bords B, B'. Avantageusement les bords B, B' pourront être revêtus d'une garniture permettant de garantir une bonne étanchéité entre les deux parties 3, 4 de la tête 2 et la bande de papier 1.

La partie tubulaire 4 est ouverte à ses deux extrémités tandis que la partie tubulaire 3 comprend un fond F, situé du côté opposé au bord B' de manière à constituer une chambre d'aspiration refermée par la bande 1.

Cette chambre est connectée au conduit d'aspiration 5 d'un perméamètre classique 6, par exemple du type de celui qui est décrit dans le brevet FR 2 779 882 déposé au nom de la Demanderesse.

Dans cet exemple, les bords B, B' des deux parties de la tête délimitent, comme indiqué figure 1, la forme d'une fente rectangulaire FR dont la largeur est très inférieure à la largeur d'une plage $P_1$, $P_2$, tandis que la longueur demeure inférieure à la largeur de la bande 1.

La bande 1, habituellement issue d'un rouleau, est guidée de part et d'autre de la tête de mesure 2 par deux systèmes de galets respectifs, à savoir, un système de galets moteurs 7 entraînés par un moteur pas à pas 8 et un système de galets 9 permettant d'assurer un guidage et une mise sous tension de la portion de bande 1 passant entre les deux parties 3, 4 de la tête de mesure 2.

Le moteur pas à pas 8 est conçu de manière à pouvoir fonctionner selon deux modes différents, à savoir :

- un premier mode selon lequel chaque pas provoque une avance millimétrique de la bande 1 ;

- un deuxième mode selon lequel chaque pas provoque une avance de la bande 1 égale à la 1/2 somme de la largeur d'une plage à forte perméabilité $P_2$ et d'une plage à faible perméabilité $P_1$ (période T/2).

La commande de ce moteur pas à pas 8 de même que la commande du perméamètre 6 et de la tête de mesure 2 sont assurées par un processeur logé dans le boîtier du perméamètre 6. Avantageusement, ce processeur pourra être connecté à divers périphériques tel qu'un afficheur 10, qu'une imprimante 11 et qu'un lecteur de disquette ou de CD ROM 12.

Bien entendu, ce processeur devra être programmé de manière à pouvoir effectuer une régression sinusoïdale et à déterminer les extrema d'une sinusoïde (valeurs pour lesquelles la dérivée s'annule et signes de la dérivée seconde pour ces valeurs).

Conformément au procédé selon l'invention, avant d'effectuer la mesure de la perméabilité des plages successives de la bande, le dispositif doit exécuter une phase préliminaire de calage comprenant les étapes suivantes :

- Une étape comprenant une mesure de perméabilité millimètre par millimètre sur une longueur de bande égale à au moins la somme d'une largeur de plage de faible perméabilité et d'une largeur de plage de forte perméabilité (période T). (Les points de mesure sont indiqués par des losanges sur le diagramme représenté sur la figure 4).

A cet effet, le moteur pas à pas 8 est commuté sur son premier mode de fonctionnement (avance millimétrique). Au cours de cette étape, les valeurs de perméabilité mesurées, associées à des informations relatives à la position de la bande 1 sont stockées dans une mémoire du processeur.

- Une seconde étape dans laquelle le processeur détermine une courbe sinusoïdale CS en coïncidence avec les valeurs relevées au cours de la première étape.

- Une troisième étape dans laquelle le processeur détermine des abscisses des deux extrema de la sinusoïde CS ainsi obtenue, qui correspondent aux axes médians transversaux AT de deux plages successives $P_1$, $P_2$ de la bande 1.

- Une quatrième étape dans laquelle le processeur détermine l'écart entre l'abscisse du deuxième extremum et l'axe OO' de la tête de mesure 2 et commande un déplacement de la bande 1 de manière à mettre en coïncidence ladite abscisse et ledit axe OO' et obtenir ainsi le calage recherché.

Une fois cette étape préliminaire effectuée, le dispositif entame la phase de mesure. A cet effet, le moteur pas à pas 8 est commuté sur son deuxième mode de fonctionnement (période T/2).
A chaque pas, la tête de mesure 2 se trouve au droit de l'axe médian transversal AT d'une plage $P_1$ ou $P_2$ et le perméamètre mesure la perméabilité. Le résultat de cette mesure est alors stocké en mémoire avec des données relatives à la position de la bande 1.
Ces informations pourront être ensuite visualisées sur l'afficheur et/ou imprimées par l'imprimante de manière à pouvoir effectuer des contrôles.
Comme précédemment mentionné, la détermination de la sinusoïde CS est obtenue au moyen d'un calcul de régression permettant d'obtenir une courbe sinusoïdale d'expression :

$$y = A_0 + A_1 \times \cos\left(2\pi \frac{x}{T}\right) + B_1 \sin\left(2\pi \frac{x}{T}\right)$$

formule dans laquelle

$A_0$, $A_1$ et $B_1$ sont des coefficients à déterminer
x est l'abscisse (qui exprime une longueur variant de 0 à T)
y est l'ordonnée (qui exprime une perméabilité)

La détermination des coefficients $A_0$, $A_1$ et $B_1$ s'obtient alors à l'aide des expressions suivantes :

$$A_0 = (\Sigma Yi)/T$$

$$A_1 = 2(\Sigma(Yi\cos(2\pi\ Xi/T)))/T$$

$$B1 = 2(\Sigma(Yi\sin(2\pi\ Xi/T)))/T$$

expressions dans lesquelles :

i est un indice variant de 1 à T

xi et yi sont les valeurs de x et y pour une valeur déterminée de i.

A partir de ces expressions, il est possible de déduire les relations suivantes :

si $A_1 = 0$ alors

$$X = \frac{T}{4} \quad \text{sinon } X = (T\text{ArcTg}(B_1/A_1))/(2\pi)$$

si $X < 0$

$$X = X + T/2$$

si $B_1 > 0$ X correspond à un maximum (forte perméabilité)
si $B, < 0$ X correspond à un minimum (faible perméabilité)

Bien entendu, l'invention ne se limite pas à ce mode de calcul étant entendu que de nombreuses solutions sont à même de parvenir à des résultats similaires.

## Revendications

1. Procédé pour la détermination automatique de la perméabilité d'une feuille ou d'une bande (1) en matière poreuse comprenant des plages successives ($P_1$, $P_2$) qui présentent alternativement, et selon une période T préétablie, des niveaux de perméabilité différents, ce procédé mettant en oeuvre un perméamètre comprenant une tête de mesure (2) vis-à-vis de laquelle ladite feuille ou ladite bande (1) peut être déplacée pas à pas,
**caractérisé en ce qu'**il comprend :

    - une phase préliminaire de calage comprenant la détermination du profil de perméabilité de la feuille ou de la bande sur une longueur de laize correspondant à au moins une période T incluant deux plages successives, la détermination d'une sinusoïde (CS) à partir du profil obtenu, la détermination de la position des deux extrema de cette sinusoïde et le centrage de la tête de mesure (2) sur le deuxième extremum, et
    - une phase de mesure comprenant, après centrage de la tête, l'avance pas à pas de la feuille ou de la bande (1) par pas de T/2, avec, à chaque pas, une mesure de perméabilité.

2. Procédé selon la revendication 1,
**caractérisé en ce que** la détermination du profil de perméabilité est obtenue en réalisant une succession de mesures de perméabilité selon une période t très inférieure à la période T.

3. Procédé selon l'une des revendications précédentes,
**caractérisé en ce que** la détermination de la susdite sinusoïde (CS) s'effectue par un calcul de régression, à partir des valeurs obtenues lors de la détermination du profil de perméabilité.

4. Procédé selon la revendication 3,
**caractérisé en ce que** la susdite régression est obtenue par la méthode des moindres carrés.

5. Procédé selon l'une des revendications précédentes,
**caractérisé en ce que** la susdite bande (1) consiste en un papier à cigarettes comprenant deux séries alternées de plages ($P_1$, $P_2$) présentant deux perméabilités différentes, ces plages s'étendant perpendiculairement à l'axe longitudinal de la bande (OX).

6. Dispositif pour la mise en oeuvre du procédé selon l'une des revendications précédentes,
**caractérisé en ce qu'**il comprend une tête de mesure (2) en deux parties tubulaires (3, 4) entre lesquelles passe ladite bande (1), ces deux parties (3, 4) étant mobiles l'une par rapport à l'autre de manière à pouvoir serrer la bande (1) entre leurs bords (B), la bande pouvant être déplacée grâce à un moteur pas à pas (8) conçu de manière à fonctionner selon deux modes, un premier mode à pas millimétrique et un deuxième mode dans lequel le pas correspond à la 1/2 somme des largeurs de deux plages consécutives ($P_1$, $P_2$).

**7.** Dispositif selon la revendication 6,
**caractérisé en ce que** la commande du moteur pas à pas (8) et la commande des mouvements de la tête de mesure (2) sont assurées par un processeur programmé de manière à calculer la susdite sinusoïde (CS) ainsi que les extrema de cette sinusoïde (CS).

**Claims**

**1.** Method for automatic determination of the permeability of a sheet or a strip (1) of porous material consisting of successive segments ($P_1$, $P_2$) which present different levels of permeability, alternately and with a pre-established periodicity T, where this method implements a permeability meter consisting of a measuring head (2) in relation to which the said sheet or strip (1) can be moved in steps,
**characterised in that** it comprises:

- a preliminary positioning stage, with determination of a permeability profile of the sheet or strip over a length of material corresponding to at least the period T, which comprises two successive segments, determination of a sinusoid (CS) from the profile obtained, determination of the position of the two ends of this sinusoid, and centring of the measuring head (2) at the second end, and

a measurement stage following centring of the head, consisting of the advance, step by step, of the sheet or strip (1) in steps of T/2, with a permeability measurement at each step.

**2.** Method according to claim 1,
**characterised in that** determination of the permeability profile is achieved by performing a succession of permeability measurements in a period which is very much less than period T.

**3.** Method according to the preceding claims,
**characterised in that** the determination of the said sinusoid (CS) is effected by means of a regression based on the values obtained during determination of the permeability profile.

**4.** Method according to claim 3,
**characterised in that** the aforementioned regression is obtained using the method of least squares.

**5.** Method according to the preceding claims,
**characterised in that** the aforementioned strip (1) consists of a cigarette paper with two alternating series of segments ($P_1$ and $P_2$) with two different permeabilities, these segments located perpendicularly to the longitudinal axis (OX) of the strip.

**6.** Device for the implementation of a method according to one of the preceding claims,
**characterised in that** it comprises a measuring head (2) with two tubular parts (3 and 4) between which the said strip (1) passes, these two parts (3 and 4) being movable in relation to each other so that they can grasp the strip (1) between their edges (B), and so that the strip can be moved by means of a stepping motor (8) designed to operate in either of two modes, namely a first mode moving millimetre by millimetre, and a second mode where the step corresponds to half of the sum of the widths of two consecutive segments ($P_1$ and $P_2$).

**7.** Device according to claim 6,
**characterised in that** control of the stepping motor (8) and control of the movements of the measuring head (2) are effected by a processor which is programmed so that it can calculate the aforementioned sinusoid (CS) as well as the ends of this sinusoid (CS).

**Patentansprüche**

**1.** Verfahren zur automatischen Permeabilitätsbestimmung eines Blattes oder eines Bandes (1) aus porösem Material mit aufeinander folgenden Bereichen ($P_1$, $P_2$) die alternativ und nach einer vorbestimmten Periode T verschiedene Permeabilitätsniveaus aufweisen, wobei bei diesem Verfahren ein Permeameter mit einem Messkopf (2) eingesetzt wird, gegenüber welchem besagtes Blatt oder besagtes Band (1) schrittweise verschoben werden kann, **gekennzeichnet dadurch, dass** es folgendes umfasst:

- eine Vorverkeilungsphase mit der Bestimmung des Permeabilitätsprofils des Blattes oder des Bandes auf einer Breite, die mindestens einer Periode T entspricht, einschließlich zwei aufeinander folgenden Bereichen, die Bestimmung einer Sinuskurve (CS) ab dem erhaltenen Profil, die Bestimmung der Position der beiden Extrema dieser Sinuskurve und die Zentrierung des Messkopfes (2) auf das zweite Extremum, und
- eine Messphase, die nach der Zentrierung des Kopfes den schrittweisen Vorschub des Blattes oder des Bandes (1) pro Schritt T/2, mit einer Permeabilitätsmessung auf jedem Schritt umfasst.

2. Verfahren nach Anspruch 1, **gekennzeichnet dadurch, dass** die Bestimmung des Permeabilitätsprofils erreicht ist, indem eine Aufeinanderfolge von Permeabilitätsmessungen nach einer Periode t, die weit niedriger als die Periode T ist, durchgeführt werden.

3. Verfahren nach einem der vorangehenden Ansprüche, **gekennzeichnet dadurch, dass** die Bestimmung der besagten Sinuskurve (CS) durch eine Regressionsrechnung erfolgt, ausgehend von den bei der Bestimmung des Permeabilitätsprofils erhaltenen Werten.

4. Verfahren nach Anspruch 3, **gekennzeichnet dadurch, dass** besagte Regression durch die Methode der geringsten Vierecke erreicht wird.

5. Verfahren nach einem der vorangehenden Ansprüche, **gekennzeichnet dadurch, dass** besagtes Band (1) aus einem Zigarettenpapier besteht, das zwei abwechselnde Reihen von Bereichen ($P_1$, $P_2$) und zwei verschiedene Durchlässigkeiten aufweist, wobei sich diese Bereiche senkrecht zur Längsachse des Bandes (OX) erstrecken.

6. Vorrichtung zur Durchführung des Verfahrens nach einem der vorangehenden Ansprüche, **gekennzeichnet dadurch, dass** diese einen Messkopf (2) aus zwei rohrförmigen Teilen (3, 4) umfasst, zwischen welche besagtes Band (1) durchführt, wobei diese beiden Teile (3, 4) zueinander beweglich sind, um das Band (1) zwischen deren Rändern (B) einspannen zu können und das Band mittels einem Schrittmotor (8) verschoben werden kann, der so konzipiert ist, um nach zwei Methoden funktionieren zu können, nämlich einer ersten Millimeterschrittmethode und einer zweiten Methode, bei welcher der Schritt der 1/2 Summe der Breiten von zwei konsekutiven Bereichen ($P_1$, $P_2$) entspricht.

7. Vorrichtung nach Anspruch 6, **gekennzeichnet dadurch, dass** die Steuerung des Schrittmotors (8) und die Steuerung der Bewegungen des Messkopfes (2) gesichert mittels einem Prozessor erfolgt, der so programmiert ist, um besagte Sinuskurve (CS) sowie die Extrema von dieser Sinuskurve (CS) zu berechnen.

## FIG.1

Faible permeabilite    Buse d'aspiration

P1 P2 P1 P2 P1 P2    1

AT    AT

o    x

AT    AT    FR

T

Forte permeabilite

## FIG.2

Permeabilite

P'2    M P'2    PP

P'1    M    P'1

M

T

x

## FIG.4

Permeabilite

CS

◆ Mesures
— Regression

x (mm)

T

FIG.3

EP 1 421 359 B1

**EP 1 421 359 B1**

## RÉFÉRENCES CITÉES DANS LA DESCRIPTION

**Documents brevets cités dans la description**

- EP 0486213 A1

- FR 2779882